# EUROPEAN PATENT SPECIFICATION

(11) **EP 1 810 740 B1**
(45) Date of publication and mention of the grant of the patent: **19.12.2012**
(21) Application number: 06380135.1
(22) Date of filing: 25.05.2006
(51) Int. Cl.: B01D 61/20, B01D 63/02, B01D 63/04, B01D 61/18, B01D 65/08, C02F 1/44, C02F 3/12

(54) **Hollow fibre module for sludge separation systems**
Hohlfasermodul für Schlammabtrennungsvorrichtungen
Module à fibres creuses pour systémes de séparation de boues

(30) Priority: 19.01.2006 ES 200600120
(43) Date of publication of application: 25.07.2007
(73) Proprietor: Acciona Agua, S.A.U., 28108 Alcobendas Madrid (ES)
(72) Inventor: Palacios Donaque Enric, 08490 Barcelona (ES)
(74) Representative: Ungria López, Javier

(56) References cited:
- WO-A-02/094421
- WO-A-2004/054692
- US-A- 5 248 424

## Description

### OBJECT OF THE INVENTION

As stated in the title of this descriptive specification, the present invention refers to a hollow fibre module for sludge separation systems intended for being installed in biological purification systems, such as bio-reactors or even coagulation-flocculation systems, all this in order to achieve an efficient separation of the sludge generated in the said processes.

An objective of the invention is to achieve the purification of waste waters with a high degree of cleanliness of them, along with the application of said modules in pre-treatment processes of water, whether it be sea-water or brackish water and whether or not reverse osmosis membranes or nanofiltration are used.

Another objective of the invention is to achieve a large filtration surface without increasing the volume of the module assembly.

### PRIOR ART OF THE INVENTION

There currently exist hollow fibre modules applied to waste water purification systems, such as membrane bio-reactors, for example. These modules consist of hollow fibres located and subjected at the ends via two covers.

The modules are normally immersed directly into the water containing the sludge, agitated with air, and the clarified water is then extracted with a suction pump. This water then passes through the interior of the fibres and the sludge is separated by the physical barrier offered by the wall of the hollow fibre membrane.

Nevertheless, in some cases depending on the type of sludge to separate, the geometry of the module and, above all, the arrangement of the hollow fibre in its interior, the sludge can accumulate at the end of the hollow fibres, thus reducing the active filtration surface.

Moreover, the air that agitates the mixture of water and sludge is also used for preventing the sludge from being deposited on the surface of the hollow fibre membrane by means of a sweeping effect.

Nevertheless, depending on the quantity and arrangement of the hollow fibres in the module, those that are located in the interior zones thereof are not swept nor agitated by the air introduced for the purpose. This means that the hollow fibre membranes become prematurely blocked, thus prematurely reducing the flow of filtered water.

Document WO 2004/054692 A describes a hollow fibre membrane module comprising, in addition to the hollow fibre membranes, air diffusers through which bubbles (air or oxygen bubbles) are introduced in order to clean the membranes in biological treating reactors in order to obtain a good permeation efficiency of the membranes for a long period of time.

Document US 5.248.424 A describes a membrane module characterised in that it is locked in a frame. This module maintains a constant flow of substrate through the membranes.

Document WO 02/094421 A describes an apparatus for filtration of liquids characterised in that it comprises an array of hollow fibre membranes arranged between an upper head and a lower head. Additionally it comprises a frame for supporting the different elements of the apparatus and non permanent joints between the heads and the frame.

### DESCRIPTION OF THE INVENTION

With the aim of achieving the objectives and preventing the drawbacks mentioned above, the invention proposes a hollow fibre module for sludge separation systems designed for the separation of sludge in biological treatments and physical-chemical treatments according to claim 1.

It comprises an upper head for the collection of treated water with a cover and a suction pipe for the filtered water, where the terminals of some fibre membranes are also encapsulated by means of an adhesive or other suitable means.

Another characteristic is that the hollow fibre membranes comprise a U-shaped structure via the lower part of which they clutch the respective air distribution pipe while the free ends are encapsulated in the suction pipe located in the upper head, as referred to above.

Another characteristic is that the fibres pass through some slots which permit their centring, each bundle of fibres being separated by the distance between the slot in such a way that there exist assemblies of several loops of fibres in parallel along the length of the respective air distribution pipe which is the element that incorporates the slots.

Another characteristic is that the water collection head incorporates guiding means for interconnecting modules in series.

Another feature is that the slotted air pipe incorporates other means for interconnecting successive air pipes from various modules via its ends, with complete sealing in order to avoid air leaks.

Other characteristics are that there also exist some blind plugs with flanges which have the task of sealing the ends of a module or group of them, these plugs being inserted into the holes in the heads and air pipes.

The flanges of the blind plugs in turn serve to secure a module or group of them with some end securing guides.

Another characteristic is that the assembly of successive modules in series is done by means of threaded rods which are introduced into some elongated holes made in the heads in the longitudinal direction.

In order to reinforce each module by joining the upper head with the structure of the lower air pipe, an adjustable mechanism is used which in principle serves to establish the tension of the hollow fibres.

Other characteristics are some perforations made in the walls of the respective air pipe in order to guarantee the dislodging of the dirt and therefore the cleanliness of the hollow fibres.

Considering another and more advantageous embodiment of the invention, this is characterised in that it incorporates at least two lower slotted pipes of different diameters which permit groups of bundles of fibres or membranes to be arranged concentrically in a single plane, thus considerably increasing the filtration surface without on the other hand increasing the volume of the module assembly.

So, the various slotted pipes will be arranged in parallel alignments secured by their ends to some common side supports, in such a way that each group of coplanar membranes will be arranged in slots of the various pipes, whose imaginary axes will be arranged in planes perpendicular to the planes where the membranes are contained with a concentric arrangement.

The characteristic of the invention is that provision has been made for a permanent tensioning device in order to compensate for the decrease in length of those hollow fibre membranes when they are submerged.

Moreover, it can be stated that the advantages of the invention that we are concerned with compared to hollow fibre modules existing on the market are essentially the following:
- A greater filtering surface is provided with the consequent reduction in occupied surface.
- A better distribution of the hollow fibre membranes is obtained, the geometry of which contributes a better distribution of the water filtering flow.
- Due to having a system of springs (tensioning device) in order to compensate for the variation in length of the hollow fibre membranes, the longitudinal stress to which those membranes can be subjected is thereby diminished.

Other advantages of the novel invention are the following:
- The air bubbles coming from the aeration external to the modules used in biological systems for waste water purification reach the external surface of the hollow fibre much more easily, producing better mechanical dragging of the dirt deposited on that surface.
- The air distribution network housed in the lower part of the actual module produces a better dragging of the dirt during the periods of back-washing of the fibres as a consequence of the geometric distribution of the hollow fibres. In other words, when a flow of clean water is introduced via the suction pipe towards the interior of the hollow fibre forcing the wash-water to exit via the filtration face, thus dislodging any substances causing blockages.
- The system of assembling several modules in series permits the right surface of hollow fibre membrane to be obtained with a geometric arrangement that keeps the hollow fibres separate with these fibres working uniformly without any preferential paths during the filtration cycle that is carried out from the outside towards the inside of the hollow fibres.
- The assembly of the modules in series provides a construction which permits the array to be handled as if it were a frame similar to that of a plane membrane system.
- Owing to its versatile assembly, the proposed design permits certain frames of hollow fibre membranes to be obtained, which can overlap in parallel at a sufficient distance for permitting the passage of air bubbles from the external aeration system via contiguous frames, which leads to an improvement in the mechanical dragging of the dirt so that it can be deposited on the surface of the hollow fibre membrane during the filtration cycle.
- The proposed system permits a very homogenous distribution of the surface of the hollow fibre membranes for bio-reactors and settling tanks in traditional physical-chemical treatment systems used in the treatment of brackish water or sea-water.
- The proposed design also permits the modules to be assembled inside a bio-reactor or settling tank by means of a system of vertical guides, furthermore permitting the entire array to be able to oscillate or vibrate under the action of the exterior and interior air, producing a beneficial effect for the dislodging of the dirt deposited on the surface of the hollow fibre membranes.
- The designed system permits a homogenous distribution of the surface of hollow fibre membranes throughout the volume of a bio-reactor or settling tank in the sludge separation process.

Below, in order to facilitate a better understanding of this specification and forming an integral part thereof, a series of figures is attached in which, by way of illustration only and not limiting, the object of the invention has been represented.

### BRIEF DESCRIPTION OF THE DRAWINGS

**Figure 1**.- Shows a front view of a hollow fibre module for sludge separation systems.
**Figure 2**.- Shows a profile view of that represented in the previous figure.
**Figure 3**.- Shows a view of a set of modules applied to a bio-reactor or settling tank.
**Figure 4**.- Shows a diagrammatic view of a set of modules coupled together.

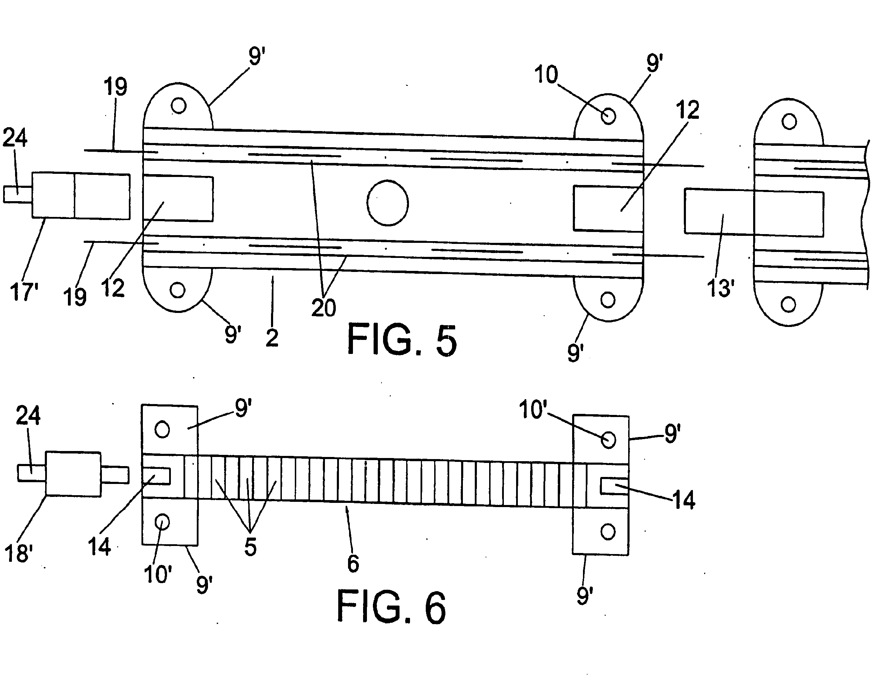

**Figure 5**.- Shows a plan view of an upper suction pipe forming part of the module of the invention.
**Figure 6**.- Shows a plan view of another lower piece which also forms part of the assembly of the inventive module.

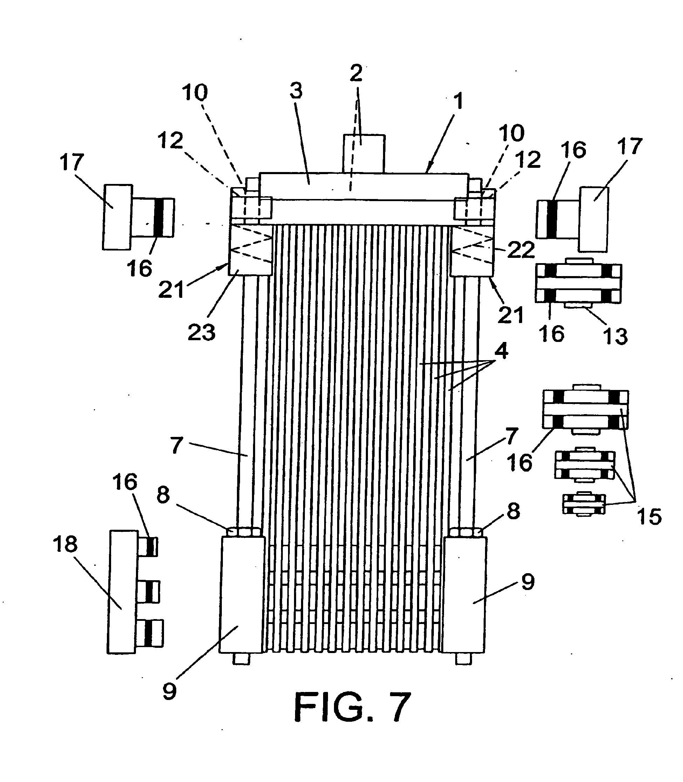

**Figure 7**.- Shows a view similar to that of figure 1 with a more the tensioning regulating device.

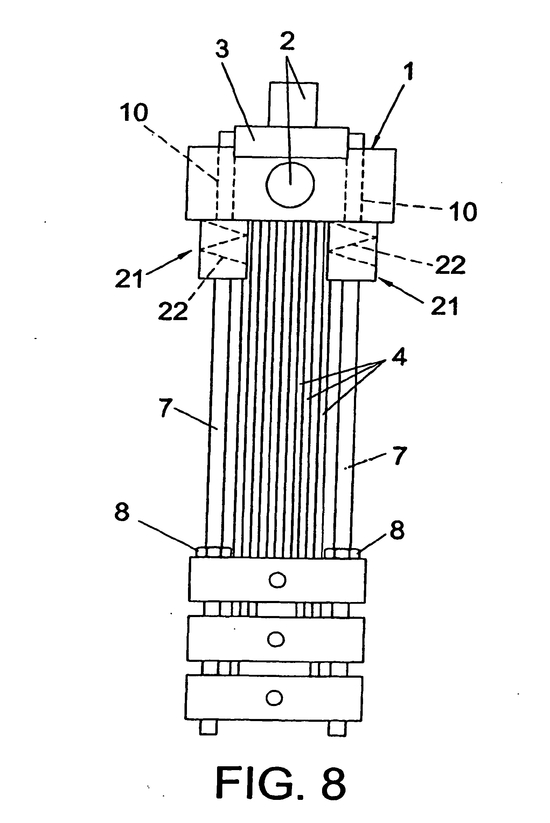

**Figure 8**.- Shows a profile view of that represented in the above figure.

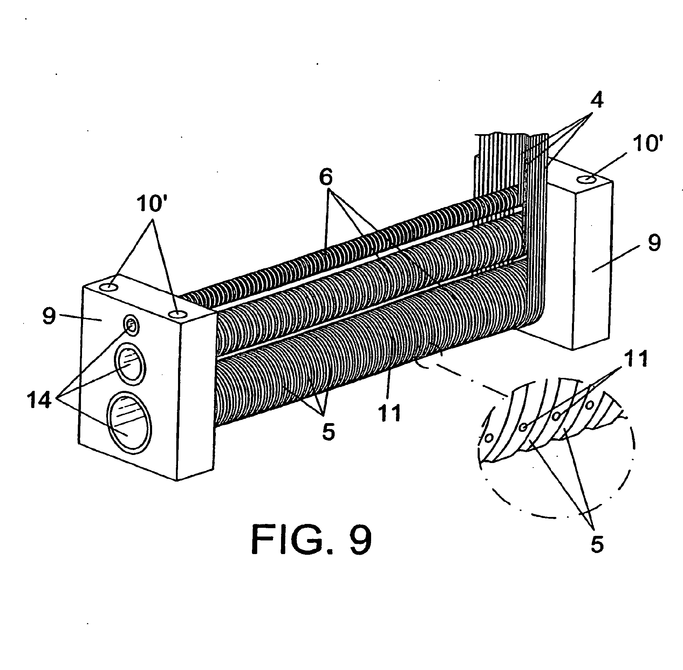

**Figure 9**.- Shows a perspective view of a lower part of the inventive module represented in the previous two figures.

### DESCRIPTION OF THE PREFERRED MANNER OF EMBODIMENT

Considering the numbering adopted in the figures, the hollow fibre module for sludge separation systems is defined on the basis of an upper head 1 provided with a suction pipe 2 and a cover 3, this pipe of the head 1 acting as the outlet for the end terminals of a succession of groups of U-shaped hollow fibre membranes 4 arranged in parallel planes, which in turn fit via their lower sections into some portions of parallel slots 5 established in lower aeration pipes 6 (essentially three pipes) parallel to the head, the latter and the said lower pipes 6 being joined by means of some guide rods 7 linked with some graduation nuts 8 and mechanical stop in order to secure the reinforcement of the module. The lower pipes 6 are joined via their ends to a pair of side supports 9 provided with holes 10 in order to permit the passage of the rods 7.

So, the head 1 and end or side supports 9 of the lower air distribution pipes 6 incorporate facing passage holes 10 and 10' through which the guide rods 7 are introduced.

The membranes 4 of each group of them are arranged in the same plane and at the same time they are fitted into portions of slots 5 of the different lower pipes 6 with a concentric arrangement, said slots constituting means for guiding and centring the fibres. The three bundles of fibres 4 of each grouping are independently secured by their free ends to the head 1.

The lower aeration pipes 6 incorporate some perforations 11, essentially conical, in order to guarantee the dislodging of the dirt and therefore the cleanliness of the hollow fibres 4, on which the particles and elements of dirt in the sludge water to purify tend to adhere.

The water collection head 1 incorporates guide holes 12 permitting the assembly of several heads 1 in series by means of an interconnecting element 13, 13'.

The lower air distribution pipes 6 carry with them the free sections of passage guides 14 complemented with the air passage interconnectors 15, 15', with sufficient sealing being produced by means of some O-rings 16.

Provision has also been made for some blind plugs 17, 17' and 18, 18' for sealing the heads and lower pipes of the end modules when there are several of them, or the ends in the event of a single module. Said plugs can incorporate guide flanges 24 for carrying out assemblies of several modules in parallel.

The assembly of each module in series is done by the joining of their heads 1 by means of some threaded rods 19, which are introduced via respective elongated holes 20 of the heads 1, at the same time as the slotted air distribution pipes are assembled by means of the corresponding air passage interconnectors 15, 15'.

So, with the new concentric arrangement of the groups of membranes 4 we achieve a large filtration surface.

Moreover, owing to the fact that some types of hollow fibre membrane undergo shrinkage in water, provision has been made for a tension regulating device 21 associated with the upper part of the guide rods 7, each tension regulating device 21 comprising some springs 22 encapsulated in some closed bushings 23 coupled around the guide rods 7 as with the springs 22, in such a way that the springs 22 are pressed upwards on the head assembly which in turn pulls on the membranes in order to keep them taut at all times and in a controlled manner.

The encapsulating of the springs 22 stops the sludge from being able to deteriorate the material of those springs 22, thereby ensuring their effectiveness at all times. In fact, these springs 22 have the purpose of compensating the decrease in length of the hollow fibre membranes when they are submerged.

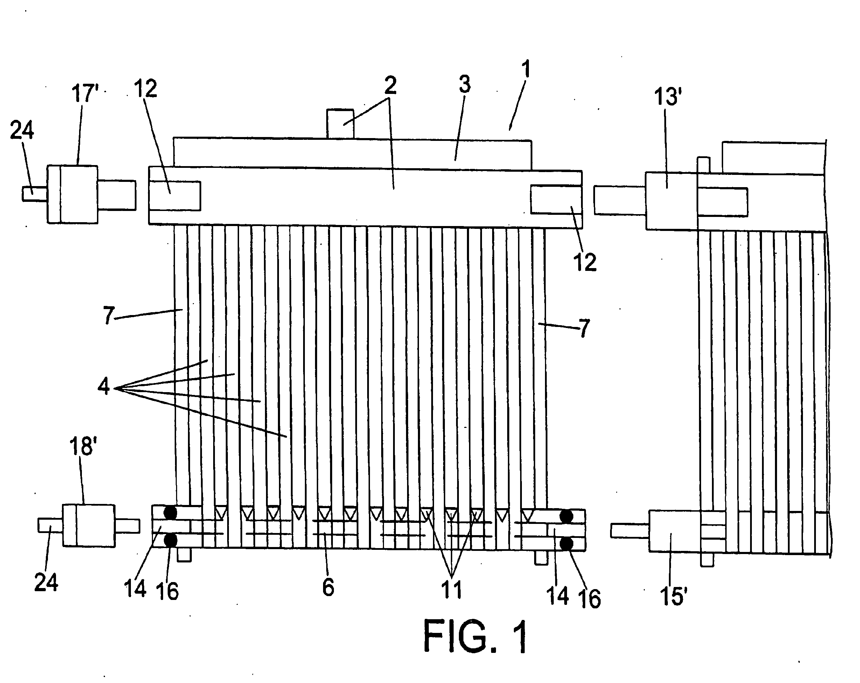

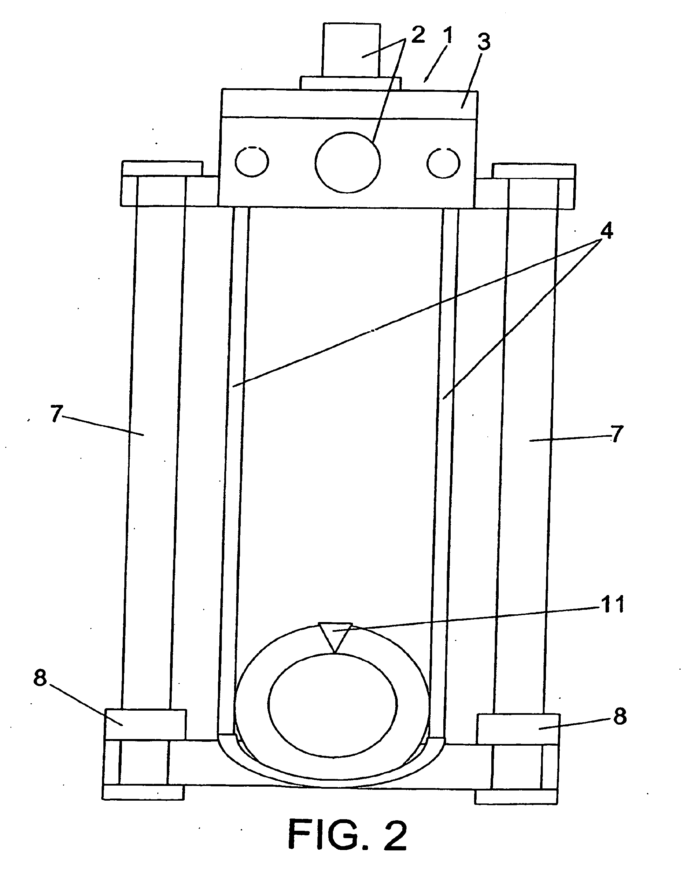

Considering a simpler embodiment (figures 1 and 2), just a single lower pipe 6 has been provided so that the membranes are then arranged with a simple formation of parallel membranes and not with concentric formations as has been described above.

In this case of the simple formation, the head 1 and lower pipe 6 can incorporate lugs 9' with the respective passage holes 10, 10' though which the respective tensioning guide Roas 7 are introduced.

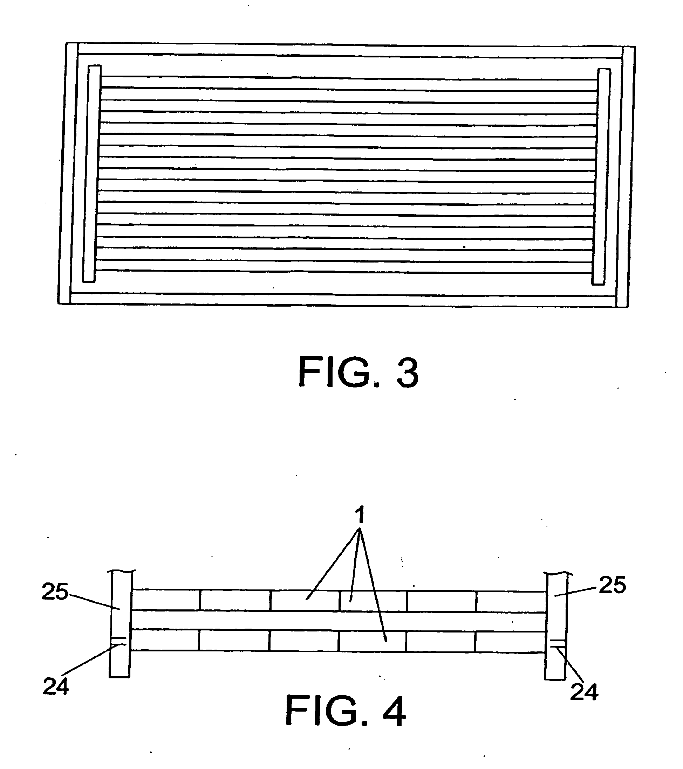

Figure 4 essentially represents the assembly of several modules interconnected together, where the array of them is mounted on some parallel guide supports 25 by means of exterior flanges 24 belonging to the respective blind plugs 17', 18'.

## Claims

1. **HOLLOW FIBRE MODULE FOR SLUDGE SEPARATION SYSTEMS,** which, including hollow fibre membranes which filter the sludge water which then exits clean through a suction pipe, and also including means of aeration of that sludge water, defined on the basis of an upper head (1) which incorporates at least one suction pipe (2) and a lower aeration structure with perforations (11) through which exits the air, coupled to this lower aeration structure being a succession of U-shaped membranes (4) arranged in parallel planes, the end terminals of which discharge into the suction pipe (2), furthermore including an adjustable mechanism for joining the head and the lower aeration structure which, as well as reinforcing and stiffening the module, help to regulate the tension of the hollow fibre membranes (4); furthermore including means of coupling of successive modules, **characterised in that** the adjustable mechanism being a permanent tension regulating device (21) capable of absorbing the variations in length undergone by the hollow fibre membranes (4) with the tension regulating device (21) comprising springs (22) coupled around guide rods (7), in such a way that one end presses against the head (1), while the other end rests against the said guide rods (7), and the elongated guide rods (7) being adjusted by their end sections in facing holes (10, 10') of the head (1) and the lower aeration structure, said mechanism being complemented with some graduation nuts (8) and mechanical stop, said nuts being coupled to threads of said elongated guide rods (7).

2. **HOLLOW FIBRE MODULE FOR SLUDGE SEPARATION SYSTEMS,** according to claim 1, **characterised in that** the lower aeration structure incorporates a succession of parallel slots (5) where the hollow fibre membranes (4) are adjusted and fit via their lower part which partially clutches that lower aeration structure

3. **HOLLOW FIBRE MODULE FOR SLUDGE SEPARATION SYSTEMS,** according to either of the above claims, **characterised in that** the perforations (11) of the lower aeration structure present a conical configuration.

4. **HOLLOW FIBRE MODULE FOR SLUDGE SEPARATION SYSTEMS,** according to either of the above claims, **characterised in that** the means of coupling of successive modules comprise:
- longitudinal holes (20) along the entire length of the heads (1) through which threaded rods (19) are introduced;
- short end holes (12) complemented with interconnectors (13, 13');
- tubular interconnectors (15, 15') which are inserted into other gaps (14) of the lower aeration structure with the interposition of some sealing O-rings (16).

5. **HOLLOW FIBRE MODULE FOR SLUDGE SEPARATION SYSTEMS,** according to claim 4, **characterised in that** it includes blind plugs (17' and 18') with projecting flanges (24) as means of coupling of a group of modules in side guide supports (25), the flanges (24) fitting into the guide supports (25) while a portion of the plugs (17' and 18') fit into other gaps (12 and 14) of the head (1) and lower aeration structure, respectively.

6. **HOLLOW FIBRE MODULE FOR SLUDGE SEPARATION SYSTEMS,** according to any of claims 2 to 5, **characterised in that** the lower aeration structure incorporates a single aeration pipe (6) with a succession of parallel slots (5) where the hollow fibre membranes (4) are adjusted and fitted via their lowest part.

7. **HOLLOW FIBRE MODULE FOR SLUDGE SEPARATION SYSTEMS,** according to claim 6, **characterised in that** the facing holes (10 and 10') where the elongated guide rods (7) are adjusted are located in some lugs (9') which form part of the head (1) and lower aeration structure.

8. **HOLLOW FIBRE MODULE FOR SLUDGE SEPARATION SYSTEMS,** according to any of claims 1 to 5, **characterised in that** the hollow fibre membranes (4) are arranged in groupings of various membranes (4) in the same plane with a concentric arrangement; all this in order to obtain a greater filtration surface without increasing the space of the module assembly.

9. **HOLLOW FIBRE MODULE FOR SLUDGE SEPARATION SYSTEMS,** according to claim 8, **characterised in that** the lower aeration structure incorporates parallel pipes (6) with slots (5) where the low parts of the U-shaped membranes (4) are coupled.

10. **HOLLOW FIBRE MODULE FOR SLUDGE SEPARATION SYSTEMS,** according to claim 9, **characterised in that** the slotted parallel pipes (6) present different sections in order to permit the concentric coupling of the various membranes in each group of slots (5) of the pipes (6), with each group of slots (5) being arranged in the same plane where each group of membranes (4) is to be found.

11. **HOLLOW FIBRE MODULE FOR SLUDGE SEPARATION SYSTEMS,** according to claim 1, **characterised in that** the springs (22) are encapsulated inside closed bushings (23) in order to prevent the sludge from being able to deteriorate the material of those springs (22) and cause them to lose their mechanical properties, with which they would cease to be effective.

12. **HOLLOW FIBRE MODULE FOR SLUDGE SEPARATION SYSTEMS,** according to claim 9, **characterised in that** the various aeration pipes (6) are secured via their ends to some side supports (9) provided with holes (10') facing the holes (10) of the head (1) in order to permit the passage of the guide rods (7).

## Patentansprüche

1. Hohlfasermodul für Schlammabtrennungssysteme, welches Hohlfasermembranen enthaltend, welche das Schlammwasser filtern, welches dann sauber durch ein Saugrohr austritt, und auch Mittel zur Belüftung dieses Schlammwasser enthaltend, welches auf der Basis eines oberen Kopfes (1), welcher wenigstens ein Saugrohr (2) und wenigstens eine untere Belüftungsstruktur mit Perforationen (11) enthält, durch welche die Luft austritt, definiert ist, wobei mit dieser unteren Belüftungsstruktur eine Aufeinanderfolge von in parallelen Ebenen angeordneten U-förmigen Membranen (4) verbunden ist, deren Endanschlüsse in das Saugrohr (12) ausgeben, ferner einen einstellbaren Mechanismus zum Verbinden des Kopfes und der unteren Belüftungsstruktur enthält, welcher sowohl unter Verstärkung als auch Versteifung des Moduls, zur Regulierung der Spannung der Hohlfasermembranen (4) beiträgt, und ferner Mittel zum Verbinden aufeinander folgender Module enthält, **dadurch gekennzeichnet, dass** der einstellbare Mechanismus eine permanente Zugspannungs-Regulierungsvorrichtung (21) ist, die in der Lage ist, die von den Hohlfasermembranen (4) durchgemachten Schwankungen in der Länge zu absorbieren, wobei die Zugspannungsvorrichtung (21) um Führungsstäbe (7) herum in einer solchen Weise verbundene Federn (22) aufweist, dass ein Ende gegen den Kopf (1) drückt, während das andere Ende an den Führungsstangen (7) anliegt und die länglichen Führungsstangen (7) durch ihre Endabschnitte in gegenüberliegenden Löchern (10, 10') des Kopfes (1) und der unteren Belüftungsstruktur eingestellt werden, wobei der Mechanismus mit einigen Einstellungsmuttern (8) und einem mechanischen Anschlag vervollständigt wird, wobei die Muttern mit Gewinden der länglichen Führungsstäbe (7) verbunden sind.

2. Hohlfasermodul für Schlammabtrennungssysteme nach Anspruch 1, **dadurch gekennzeichnet, dass** die untere Belüftungsstruktur eine Aufeinanderfolge paralleler Schlitze (5) enthält, wobei die Hohlfasermembranen (4) mittels ihres unteren Teils eingestellt und angepasst werden, welcher teilweise diese untere Belüftungsstruktur umklammert.

3. Hohlfasermodul für Schlammabtrennungssysteme nach einem der vorstehenden Ansprüche, **dadurch gekennzeichnet, dass** die Perforationen (11) der unteren Belüftungsstruktur eine konische Ausgestaltung zeigen.

4. Hohlfasermodul für Schlammabtrennungssysteme nach einem der vorstehenden Ansprüche, **dadurch gekennzeichnet, dass** die Mittel zur Kopplung aufeinanderfolgender Module umfassen:
- Längslöcher (12) entlang der gesamten Länge der Köpfe (1), durch welche Gewindestangen (19) eingeführt sind;
- kurze Endlöcher (12), die mit Zwischenverbindern (13, 13') ergänzt sind;
- rohrförmige Zwischenverbinder (15, 15'), welche in andere Spalte (14) der unteren Belüftungsstruktur unter Einfügung einiger dichtender O-Ringe (16) eingesetzt sind.

5. Hohlfasermodul für Schlammabtrennungssysteme nach Anspruch 4, **dadurch gekennzeichnet, dass** es Blindstopfen (17' und 18') mit vorstehenden Flanschen (24) als Mittel zur Verbindung einer Gruppe von Modulen in Seitenführungsstützen (25) enthält, wobei die Flansche (24) in die Führungsstützen (25) passen, während ein Abschnitt der Stopfen (17' und 18') in anderen Spalten (12 und 14) des Kopfes (1) bzw. der unteren Belüftungsstruktur passt.

6. Hohlfasermodul für Schlammabtrennungssysteme nach einem der Ansprüche 2 bis 5, **dadurch gekennzeichnet, dass** die untere Belüftungsstruktur nur ein Belüftungsrohr (6) mit einer Aufeinanderfolge paralleler Schlitze (5) enthält, wo die Hohlfasermembranen (4) über ihren untersten Abschnitt eingestellt und angepasst sind.

7. Hohlfasermodul für Schlammabtrennungssysteme nach Anspruch 6, **dadurch gekennzeichnet, dass** die gegenüberliegenden Löcher (10 und 10'), dort wo die länglichen Führungsstangen (7) eingestellt werden, in einigen Halterungen (9') angeordnet sind, welche einen Teil des Kopfes (1) und der unteren Belüftungsstruktur bilden.

8. Hohlfasermodul für Schlammabtrennungssysteme nach einem der Ansprüche 1 bis 5, **dadurch gekennzeichnet, dass** die Hohlfasermembranen (4) in Gruppierungen verschiedener Membranen (4) in derselben Ebene mit einer konzentrischen Anordnung angeordnet sind; und all dieses, um eine größere Filterungsoberfläche ohne Vergrößerung des Zwischenraums der Modulanordnung zu erhalten.

9. Hohlfasermodul für Schlammabtrennungssysteme nach Anspruch 8, **dadurch gekennzeichnet, dass** die untere Belüftungsstruktur parallele Rohre (6) mit Schlitzen (5) dort enthält, wo die unteren Teile der U-förmigen Membranen verbunden sind.

10. Hohlfasermodul für Schlammabtrennungssysteme nach Anspruch 9, **dadurch gekennzeichnet, dass** die geschlitzten parallelen Rohre (6) unterschiedliche Bereiche darstellen, um die konzentrische Verbindung der verschiedenen Membranen in jeder Gruppe von Schlitzen (5) der Rohre (6) zu ermöglichen, wobei jede Gruppe von Schlitzen (5) in derselben Ebene dort angeordnet ist, wo jede Gruppe von Membranen (4) zu finden ist.

11. Hohlfasermodul für Schlammabtrennungssysteme nach Anspruch 1, **dadurch gekennzeichnet, dass** die Federn (22) innerhalb geschlossener Hülsen (23) eingekapselt sind, um zu verhindern, dass Schlamm das Material dieser Federn (12) angreifen kann und den Verlust ihrer mechanischen Eigenschaften bewirkt, mit welchen sie ihre Wirkung verlieren würden.

12. Hohlfasermodul für Schlammabtrennungssysteme nach Anspruch 9, **dadurch gekennzeichnet, dass** die verschiedenen Belüftungsrohre (6) mittels ihrer Enden an einigen Seitenstützen (9) befestigt sind, die mit Löchern (10') versehen sind, die Löchern (10) des Kopfes (1) gegenüberliegen, um den Durchtritt der Führungsstangen (7) zu ermöglichen.

## Revendications

1. Module à fibres creuses pour des systèmes de séparation de boues comprenant des membranes à fibres creuses qui filtrent l'eau boueuse qui sort ensuite propre à travers un tuyau d'aspiration, et comprenant également des moyens d'aération de cette eau boueuse, défini sur la base d'une tête supérieure (1) qui incorpore au moins un tuyau d'aspiration (2) et une structure d'aération inférieure pourvue de perforations (11) à travers lesquelles l'air sort, une succession de membranes en forme de U (4) agencées dans des plans parallèles et dont les extrémités terminales se déchargent dans le tuyau d'aspiration (2) sont couplées à cette structure d'aération inférieure, comprenant en outre un mécanisme réglable pour joindre la tête et la structure d'aération inférieure qui, en plus de renforcer et de rigidifier le module, aide à réguler la tension des membranes à fibres creuses (4), comprenant en outre un moyen de couplage de modules successifs, **caractérisé en ce que** le mécanisme réglable est un dispositif de régulation de tension permanente (21) qui est capable d'absorber les variations de longueur subies par les membranes à fibres creuses (4), dans lequel le dispositif de régulation de tension (21) comprend des ressorts (22) couplés autour de tiges de guidage (7), de telle sorte qu'une extrémité exerce une pression contre la tête (1), alors que l'autre extrémité s'appuie contre lesdites tiges de guidage (7), et les tiges de guidage allongées (7) étant ajustées par leurs sections d'extrémité dans des trous frontaux (10, 10') de la tête (1) et de la structure d'aération inférieure, ledit mécanisme étant complété par plusieurs écrous de graduation (8) et un arrêt mécanique, lesdits écrous étant couplés à des filets desdites tiges de guidage allongées (7).

2. Module à fibres creuses pour des systèmes de séparation de boues selon la revendication 1, **caractérisé en ce que** la structure d'aération inférieure incorpore une succession de fentes parallèles (5), dans lesquelles les membranes à fibres creuses (4) sont ajustées et s'agencent par l'intermédiaire de leur partie inférieure qui s'accroche partiellement à cette structure d'aération inférieure.

3. Module à fibres creuses pour des systèmes de séparation de boues selon l'une quelconque des revendications précédentes, **caractérisé en ce que** les perforations (11) de la structure d'aération inférieure présentent une configuration conique.

4. Module à fibres creuses pour des systèmes de séparation de boues selon l'une quelconque des revendications précédentes, **caractérisé en ce que** le moyen de couplage de modules successifs comprend:
- des trous longitudinaux (20) le long de la totalité de la longueur des têtes (1) à travers lesquels des tiges filetées (19) sont introduites;
- des trous d'extrémité courts (12) pourvus d'interconnecteurs (13, 13');
- des interconnecteurs tubulaires (15, 15') qui sont insérés dans d'autres espaces (14) de la structure d'aération inférieure avec interposition de plusieurs joints toriques (16).

5. Module à fibres creuses pour des systèmes de séparation de boues selon la revendication 4, **caractérisé en ce qu'**il comprend des bouchons aveugles (17' et 18') pourvus de brides saillantes (24) comme moyen de couplage d'un groupe de modules dans des supports de guidage latéraux (25), les brides (24) s'agençant dans les supports de guidage (25) pendant qu'une partie des bouchons (17' et 18') s'agence dans d'autres espaces (12 et 14) de la tête (1) et de la structure d'aération inférieure, respectivement.

6. Module à fibres creuses pour des systèmes de séparation de boues selon l'une quelconque des revendications 2 à 5, **caractérisé en ce que** la structure d'aération inférieure incorpore un seul tuyau d'aération (6) comportant une succession de fentes parallèles (5) dans lesquelles les membranes à fibres creuses (4) sont ajustées et agencées par l'intermédiaire de leur partie la plus basse.

7. Module à fibres creuses pour des systèmes de séparation de boues selon la revendication 6, **caractérisé en ce que** les trous frontaux (10 et 10') dans lesquels les tiges de guidage allongées (7) sont ajustées et situées dans plusieurs oreilles (9') qui font partie de la tête ((1) et de la structure d'aération inférieure.

8. Module à fibres creuses pour des systèmes de séparation de boues selon l'une quelconque des revendications 1 à 5, **caractérisé en ce que** les membranes à fibres creuses (4) sont agencées en groupes de plusieurs membranes (4) dans le même plan avec un agencement concentrique dans le but d'obtenir une plus grande surface de filtration sans augmenter l'espace de l'ensemble de module.

9. Module à fibres creuses pour des systèmes de séparation de boues selon la revendication 8, **caractérisé en ce que** la structure d'aération inférieure incorpore des tuyaux parallèles (6) comportant des fentes (5) dans lesquelles les parties inférieures des membranes en forme de U (4) sont couplées.

10. Module à fibres creuses pour des systèmes de séparation de boues selon la revendication 9, **caractérisé en ce que** les tuyaux parallèles fendus (6) présentent différentes sections dans le but de permettre le couplage concentrique des différentes membranes dans chaque groupe de fentes (5) des tuyaux (6), chaque groupe de fentes (5) étant agencé dans le même plan que celui dans lequel chaque groupe de membranes (4) doit se trouver.

11. Module à fibres creuses pour des systèmes de séparation de boues selon la revendication 1, **caractérisé en ce que** les ressorts (22) sont logés à l'intérieur de douilles fermées (23) dans le but d'empêcher la boue de pouvoir détériorer le matériau de ces ressorts (22) et de les entraîner à perdre leurs propriétés mécaniques, avec comme conséquence la perte de leur efficacité.

12. Module à fibres creuses pour des systèmes de séparation de boues selon la revendication 9, **caractérisé en ce que** les différents tuyaux d'aération (6) sont fixés par l'intermédiaire de leurs extrémités à plusieurs supports latéraux (9) comportant des trous (10') en face des trous (10) de la tête (1) dans le but de permettre le passage des tiges de guidage (7).
